(19)

**Europäisches Patentamt**
**European Patent Office**
**Office européen des brevets**

(11) **EP 4 050 562 A1**

(12) # EUROPEAN PATENT APPLICATION
published in accordance with Art. 153(4) EPC

(43) Date of publication:
**31.08.2022 Bulletin 2022/35**

(51) International Patent Classification (IPC):
**G06T 7/194** (2017.01)

(21) Application number: **20934056.1**

(22) Date of filing: **19.11.2020**

(86) International application number:
**PCT/CN2020/130107**

(87) International publication number:
**WO 2021/218123 (04.11.2021 Gazette 2021/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.04.2020 CN 202010347485**

(71) Applicant: **BEIJING BAIDU NETCOM SCIENCE TECHNOLOGY CO., LTD.**
**No. 10 Shangdi 10th Street**
**Haidian District**
**Beijing 100085 (CN)**

(72) Inventors:
• **ZHANG, Wei**
  **Beijing 100085 (CN)**
• **YE, Xiaoqing**
  **Beijing 100085 (CN)**
• **TAN, Xiao**
  **Beijing 100085 (CN)**
• **SUN, Hao**
  **Beijing 100085 (CN)**
• **WEN, Shilei**
  **Beijing 100085 (CN)**
• **ZHANG, Hongwu**
  **Beijing 100085 (CN)**
• **DING, Errui**
  **Beijing 100085 (CN)**

(74) Representative: **Lucke, Andreas**
**Boehmert & Boehmert**
**Anwaltspartnerschaft mbB**
**Pettenkoferstrasse 22**
**80336 München (DE)**

(54) **METHOD AND DEVICE FOR DETECTING VEHICLE POSE**

(57)     A method and device for detecting a vehicle pose, relating to the fields of computer vision and automatic driving. The specific implementation solution comprises: inputting a vehicle left view point image and a vehicle right view point image into a part prediction and mask segmentation network model, and determining foreground pixel points and part coordinates thereof in a reference image; obtaining a pseudo point cloud on the basis of disparity maps of the vehicle left view point image and the vehicle right view point image, the part coordinates of the foreground pixel points and a camera internal parameter of the reference image; and inputting the pseudo point cloud into a pre-trained pose prediction model to obtain pose information of a vehicle to be detected. Part prediction and mask segmentation are performed on the acquired vehicle left view point image and right view point image on the basis of part prior data of a vehicle, and a more accurate segmentation result can be obtained, so that the accuracy of vehicle pose prediction is improved.

Fig. 2

## Description

This application claims priority from Chinese Patent Application No. 202010347485.7, filed on April 28, 2020, titled "Method and Apparatus for Detecting Vehicle Pose". The disclosure of the application is hereby incorporated by reference in its entirety.

## TECHNICAL FIELD

Embodiments of the present disclosure disclose a method and apparatus for detecting vehicle pose, which relate to the field of computer technology, particularly to the field of automatic driving.

## BACKGROUND

3D vehicle tracking is an indispensable and important technology in application scenarios such as autonomous driving and robotics. An inherent difficulty thereof is how to obtain accurate depth information to achieve accurate detection and positioning of each vehicle. 3D pose detection technology may be divided into three categories according to the way of acquiring depth information: 3D pose detection technology based on monocular vision, 3D pose detection technology based on binocular vision, and 3D pose detection technology based on lidar.

In the related art, there are two methods for predicting the 3D pose of a vehicle based on binocular vision. One is Stereo-RCNN. This method can realize the matching of 2D detection and detection frame for the left and right images at the same time; then regress a 2D key points and a 3D information of length, width and height based on the characters extracted from the left and right detection frames; and finally use the key points to establish a 3D-2D projection equation, solve to get the 3D pose of the vehicle. The other is Pseudo-LiDAR. This method first performs pixel-level disparity estimation on the whole image, then obtains a relatively sparse pseudo-point cloud, and applies the point cloud 3D detection model trained based on real point cloud data of LiDAR to the pseudo-point cloud to predict the 3D pose of the vehicle.

## SUMMARY

Embodiments of the present disclosure provide a method and apparatus for detecting vehicle pose, a device and a storage medium.

According to a first aspect of the present disclosure, some embodiments of the present disclosure provide a method for detecting vehicle pose, the method includes: inputting a vehicle left viewpoint image and a vehicle right viewpoint image into a part location and mask segmentation network model constructed based on prior data of a vehicle part, and determining foreground pixels in a reference image and a part coordinate of each foreground pixel, wherein the part coordinate is used to represent a position of the foreground pixel in a coordinate system of a vehicle to be detected, and the reference image is the vehicle left viewpoint image or the vehicle right viewpoint image; based on a disparity map between the vehicle left viewpoint image and the vehicle right viewpoint image, part coordinates of the foreground pixels, and a camera intrinsic parameter of the reference image, converting coordinates of the foreground pixels in the reference image into coordinates of the foreground pixels in a camera coordinate system, so as to obtain a pseudo-point cloud; and inputting the pseudo-point cloud into a pre-trained pose prediction model to obtain a pose information of the vehicle to be detected.

According to a second aspect of the present disclosure, some embodiments of the present disclosure provide an apparatus for detecting vehicle pose, the apparatus includes: an image segmentation module, configured to input a vehicle left viewpoint image and a vehicle right viewpoint image into a part location and mask segmentation network model constructed based on prior data of a vehicle part, and determine foreground pixels in a reference image and a part coordinate of each foreground pixel, wherein the part coordinate is used to represent a position of the foreground pixel in a coordinate system of a vehicle to be detected, and the reference image is the vehicle left viewpoint image or the vehicle right viewpoint image; a point cloud generation module, configured to convert coordinates of the foreground pixels in the reference image into coordinates of the foreground pixels in a camera coordinate system, based on a disparity map between the vehicle left viewpoint image and the vehicle right viewpoint image, part coordinates of the foreground pixels, and a camera intrinsic parameter of the reference image, so as to obtain a pseudo-point cloud; and a pose prediction module, configured to input the pseudo-point cloud into a pre-trained pose prediction model to obtain a pose information of the vehicle to be detected.

According to the above embodiments of the present disclosure, the problem that the block phenomenon reduces the accuracy of the 3D pose prediction of the vehicle is solved. The part location and mask segmentation are performed on the collected left viewpoint image and right viewpoint image of the vehicle based on the prior data of vehicle part, thus more accurate segmentation results can be obtained, and the accuracy of vehicle pose prediction can be improved.

It should be understood that the content described in this part is not intended to identify key or important features of the embodiments of the present disclosure, and is not used to limit the scope of the present disclosure. Other features of the present disclosure will be easily understood through the following description.

BRIEF DESCRIPTION OF THE DRAWINGS

The accompanying drawings are used for a better understanding of the scheme, and do not constitute a limitation to the present disclosure. Here:

Fig. 1 is a diagram of an exemplary system architecture in which embodiments of the present disclosure may be applied;

Fig. 2 is a schematic diagram of the first embodiment of the present disclosure;

Fig. 3 is a schematic diagram of a scenario embodiment of a method for detecting vehicle pose provided by embodiments of the present disclosure;

Fig. 4 is a schematic diagram of the second embodiment of the present disclosure;

Fig. 5 is a block diagram of an electronic device used to implement the method for detecting vehicle pose according to embodiments of the present disclosure; and

Fig. 6 is a scenario diagram of a computer-storable medium in which embodiments of the present disclosure can be implemented.

DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description.

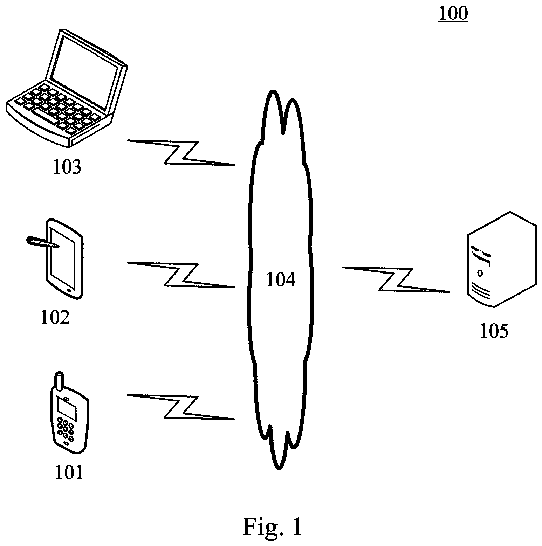

Fig. 1 illustrates an exemplary system architecture 100 in which a method for detecting vehicle pose or an apparatus for detecting vehicle pose according to embodiments of the present disclosure may be applied.

As shown in Fig. 1, the system architecture 100 may include terminal device(s) 101, 102,103, a network 104 and a server 105. The network 104 serves as a medium providing a communication link between the terminal device(s) 101, 102, 103 and the server 105. The network 104 may include various types of connections, for example, wired or wireless communication links, or optical fiber cables.

A user may use the terminal device(s) 101, 102, 103 to interact with the server 105 via the network 104, to receive or send data, etc., for example, send the acquired left viewpoint images and right viewpoint images of the vehicle to be detected to the server 105, and receive from the server 105 the detected pose information of the vehicle to be detected.

The terminal device(s) 101, 102, 103 may be hardware or software. When being the hardware, the terminal device(s) 101, 102, 103 may be various electronic devices that have the function of exchanging data with the server, the electronic devices including, but not limited to a smartphone, a tablet computer, a vehicle-mounted computer, and the like. When being the software, the terminal device(s) 101, 102, 103 may be installed in the above listed electronic devices. The terminal device(s) 101, 102, 103 may be implemented as a plurality of pieces of software or a plurality of software modules (e.g., software or software modules for providing a distributed service), or may be implemented as a single piece of software or a single software module, which will not be specifically defined here.

The server 105 may be a server providing data processing services, such as a background data server that processes the left viewpoint images and right viewpoint images of the vehicle to be detected uploaded by the terminal device(s) 101, 102, 103.

It should be noted that the method for detecting the vehicle posture provided by the embodiments of the present disclosure may be executed by the server 105, and correspondingly, the apparatus for detecting the vehicle posture may be provided in the server 105. At this time, the terminal device may send the scenario image collected by the binocular camera or the left viewpoint images and the right viewpoint images of the vehicle to be detected to the server 105 via the network, and the server 105 may predict the pose information of the vehicle therefrom. The method for detecting the vehicle pose provided by the embodiments of the present disclosure may also be executed by a terminal device, such as a vehicle-mounted computer. Accordingly, the apparatus for detecting vehicle pose may be set in the terminal device. The vehicle-mounted computer may extract the left viewpoint image and the right viewpoint image of the vehicle to be detected from the scenario image collected by a vehicle-mounted binocular camera, then predict the pose information of the vehicle to be detected from the left viewpoint image and the right viewpoint image, which is not limited in present disclosure.

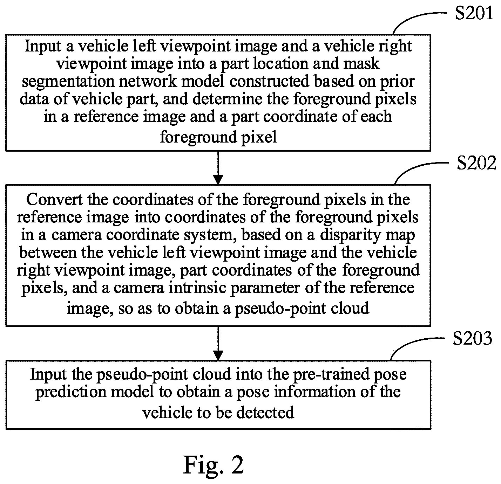

Further referring to Fig. 2, Fig. 2 illustrates a flowchart of the first embodiment of a method for detecting a vehicle pose according to the disclosure, including the following steps:

Step S201: inputting a vehicle left viewpoint image and a vehicle right viewpoint image into a part location and mask segmentation network model constructed based on prior data of vehicle part, and determining the foreground pixels in a reference image and a part coordinate of each foreground pixel, where a part coordinate is used to represent a position of a foreground pixel in a coordinate system of a vehicle to be detected, and the reference image is the vehicle left viewpoint image or the vehicle right viewpoint image.

In this embodiment, the foreground pixel is used to represent a pixel located within the contour area of the vehicle to be detected in the reference image, that is, a point located on the surface of the vehicle to be detected in an actual scenario.

In this embodiment, the vehicle left viewpoint image and the vehicle right viewpoint image are two frames of images of the vehicle to be detected extracted from the scenario image collected by the binocular camera, and the pose information predicted by the execution body is a pose of the vehicle to be detected presented in the reference image.

As an example, the execution body may input a scenario left viewpoint image and a scenario right viewpoint image of the same scenario collected by the binocular camera into a pre-built Stereo-RPN model, which may simultaneously realize 2D detection and detection frame matching of the scenario left viewpoint image and the scenario right viewpoint image. Two frames of images of a same vehicle instance segmented from the two frames of scenario images are the vehicle left viewpoint image and the vehicle right viewpoint image of the vehicle. The execution body may also directly obtain the vehicle left viewpoint image and the vehicle right viewpoint image through a pre-trained extraction network for vehicle left viewpoint image and vehicle right viewpoint image. After that, the vehicle left viewpoint image or the vehicle right viewpoint image maybe selected as the reference image according to the actual needs. For example, the image with the smaller blocked area of the vehicle to be detected may be selected to obtain higher accuracy, alternatively, one frame of the images may be randomly selected as the reference image.

In this embodiment, when constructing the part location and mask segmentation network model, the prior data of vehicle part is introduced, so as to improve the accuracy of segmenting the foreground pixels from the reference image. The part location and mask segmentation network model includes a part location sub-network and a mask segmentation sub-network. Here, the part location sub-network is used to determine the part coordinate of each foreground pixel, and the mask segmentation sub-network is used to determine the foreground pixels from the reference image.

As an example, the execution body may construct a mask based on the contour of the vehicle, and use the pixels located within the mask area in the input vehicle left viewpoint image and vehicle right viewpoint image as foreground pixels, and perform foreground view and background view segmentation on the vehicle left viewpoint image and the vehicle right viewpoint image to obtain a set of foreground pixels in the vehicle left viewpoint image and a set of foreground pixels in the vehicle right viewpoint image, respectively. It may be understood that by arranging the foreground pixels according to their pixel coordinate arrangements in the vehicle left viewpoint image or the vehicle right viewpoint image, thus the image contour of the vehicle to be detected in the corresponding image can be obtained. Due to a large blocked area in the reference image, the segmentation boundaries of foreground view and background view in the reference image may be inaccurate, thus the accuracy of the foreground view and background view segmentation of the reference image will be lower than that of the other frame of image. In this case, the foreground pixels extracted from the other frame of image may be compared with the foreground pixels extracted from the reference image, so as to improve the accuracy of segmenting the foreground pixels from the reference image.

Then, based on the prior data of 3D vehicle part, the part location network establishes the coordinate system of the vehicle for a image constituted by the foreground pixels extracted from the reference image according to their pixel coordinates, and the obtained coordinates of the foreground pixels in the coordinate system of the vehicle is the part coordinates of the foreground pixels, which is used to represent the part features of the foreground pixels in the vehicle to be detected.

In some optional implementations of this embodiment, only the reference image may be input into the part location and mask segmentation network model constructed based on the prior data of vehicle part, so as to obtain the foreground pixels and the part coordinate of each foreground pixel in the reference image.

Step S202: based on a disparity map between the vehicle left viewpoint image and the vehicle right viewpoint image, the part coordinates of the foreground pixels, and a camera intrinsic parameter of the reference image, converting the coordinates of the foreground pixels in the reference image into coordinates of the foreground pixels in a camera coordinate system, so as to obtain a pseudo-point cloud.

In this embodiment, the feature information of each foreground pixel in the pseudo-point cloud not only includes the position feature of the foreground pixel in the reference image, but also includes the part feature of the pixel in the vehicle to be detected.

As an example, the execution body may generate a pseudo-point cloud through the following steps: first, calculating the depth value of each foreground pixel in the reference image based on the disparity map between the vehicle left viewpoint image and the vehicle right viewpoint image, and then in combination with the camera intrinsic parameter corresponding to the reference image, converting 2D coordinates of the foreground pixels in the reference image to 3D coordinates in the camera coordinate system to obtain a point cloud composed of foreground pixels, at this time, only the cloud coordinates of the foreground pixels are included in the point cloud; and then aggregating the part coordinates of the foreground pixels into the point cloud, so as to obtain a pseudo-point cloud composed of foreground pixels. For an example in combination with a specific scenario, assuming that the reference image includes N foreground pixels, the feature dimension of the pseudo-point cloud data is N*6, of which N*3 dimensions are the pseudo-point cloud coordinates of the foreground pixels, and the other N*3 dimensions are the part coordinates of the foreground pixels.

It may be understood that determining the depth value of the pixel according to the disparity map and converting the 2D coordinate of the pixel to the 3D coordinate in combination with the camera intrinsic parameter is a mature technology in the field of computer vision, which is not limited in present disclosure.

In some optional implementations of this embodiment, the execution body may also determine the pseudo-point cloud through the following steps: based on the camera intrinsic parameter of the reference image and the disparity map between the vehicle left viewpoint image and the vehicle right viewpoint image, determining a depth value of a foreground pixel; based on the coordinate of the foreground pixel in the reference image and the depth value, obtaining an initial coordinate of the foreground pixel in the camera coordinate system; and, based on the part coordinate of the foreground pixel, updating the initial coordinate to obtain a pseudo-point cloud coordinate of the foreground pixel.

In this implementation, the execution body does not simply aggregate the part coordinate of the foreground pixel into the point cloud data, but uses the part coordinate of the foreground pixel as constraint to correct the initial coordinate of the foreground pixel, and then constructs a pseudo point cloud based on the corrected coordinates, so as to obtain point cloud data with higher accuracy.

Step S203: inputting the pseudo-point cloud into the pre-trained pose prediction model to obtain a pose information of the vehicle to be detected.

As an example, the execution body may input the pseudo-point cloud obtained in step S202 into a pre-trained Dense Fusion model. The Point net network in the Dense Fusion model generates the corresponding geometric feature vector and part feature vector, based on the pseudo-point cloud coordinate and the part coordinate. Then a geometric feature vector and a part feature vector are input into a pixel-level fusion network, and the fusion network predicts camera extrinsic parameters of the reference image (a rotation matrix and a translation matrix of the camera) based on the geometric feature vector and the part feature vector, and then determines the coordinate of each foreground pixel in the world coordinate system based on the camera extrinsic parameters. Thereby the pose information of the vehicle to be detected may be obtained.

It should be noted that converting the 3D coordinates of pixels in the image in the camera into world coordinates based on camera extrinsic parameters is a mature technical means in the field of computer vision, and will not be repeated herein.

In the method for detecting vehicle pose in the above embodiments disclosed in the present disclosure, based on the prior data of the vehicle part, part location and mask segmentation are performed on the collected left viewpoint image and right viewpoint image of the vehicle, so that more accurate segmentation can be obtained. As a result, the accuracy of the vehicle pose prediction is improved.

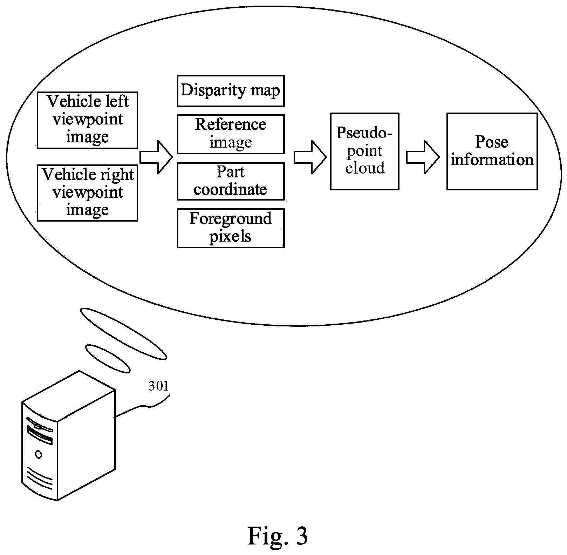

Further referring to Fig. 3, Fig. 3 illustrates an application scenario provided by the present disclosure for detecting vehicle pose. In the application scenario of Fig. 3, the execution body 301 may be a vehicle-mounted computer in an autonomous driving vehicle, and a binocular camera is provided on the autonomous driving vehicle. The vehicle-mounted computer extracts the vehicle left viewpoint image and the vehicle right viewpoint image of each vehicle to be detected in the scenario from the scenario image collected by the binocular camera in real time, then determines the reference image an disparity map from the vehicle left viewpoint image and the vehicle right viewpoint image of each vehicle to be detected, and determines the foreground pixels and the part coordinate of each foreground pixel from the reference image, and generates a pseudo-point cloud based on the obtained foreground pixels, and finally predicts the pose information of each vehicle to be detected in the scenario, so as to support the path planning of the autonomous driving vehicle.

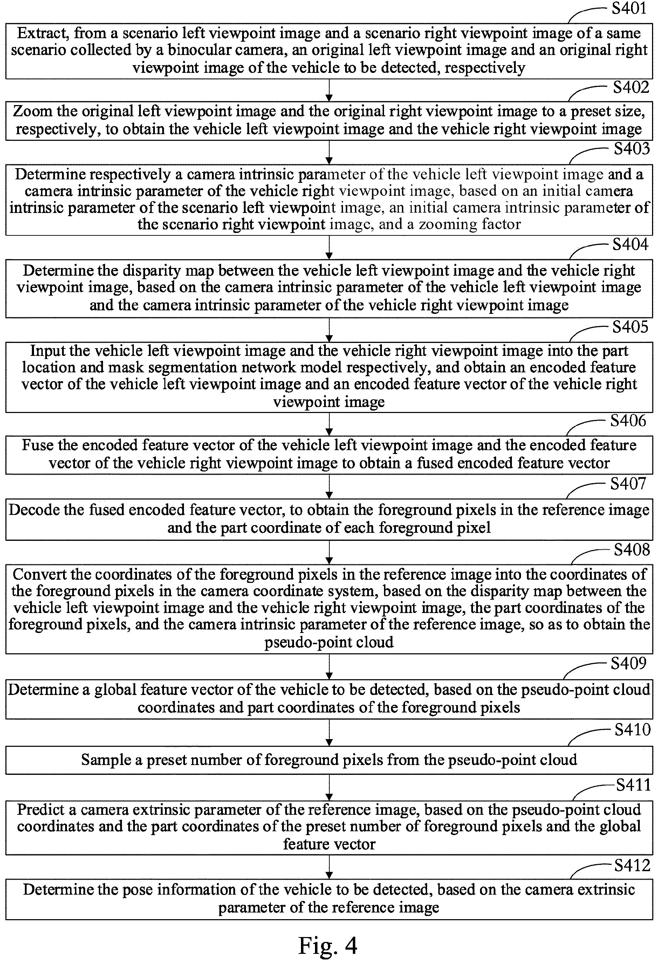

Further referring to Fig. 4, Fig. 4 illustrates a flow chart of the method for detecting vehicle pose according to the second embodiment of the present disclosure, including the following steps:

Step S401: extracting, from a scenario left viewpoint image and a scenario right viewpoint image of a same scenario collected by a binocular camera, an original left viewpoint image and an original right viewpoint image of the vehicle to be detected, respectively.

As an example, the execution body may input the scenario left viewpoint image and the scenario right viewpoint image into the Stereo-RPN network model, and extract the original left viewpoint image and original right viewpoint image of the vehicle to be detected from the Stereo-RPN network model.

Step S402: zooming the original left viewpoint image and the original right viewpoint image to a preset size, respectively, to obtain the vehicle left viewpoint image and the vehicle right viewpoint image.

Generally, the farther the collection distance of the binocular camera is from the vehicle to be detected, the smaller the size of the vehicle left viewpoint image and the vehicle right viewpoint image obtained in step S401, and the size of the vehicle left viewpoint image and the size of the vehicle right viewpoint image are also different, and thus the accuracy of the pose information of the vehicle to be detected obtained based thereon is relatively low. Therefore, in this embodiment, the execution body zooms the original left viewpoint image and the original right viewpoint image obtained in step S401 to the preset size, respectively, so as to obtain a vehicle left viewpoint image and a vehicle right viewpoint image with higher definition and the same size.

Step S403: based on an initial camera intrinsic parameter of the scenario left viewpoint image, an initial camera intrinsic parameter of the scenario right viewpoint image, and a zooming factor, respectively determining a camera intrinsic parameter of the vehicle left viewpoint image and a camera intrinsic parameter of the vehicle right viewpoint image.

In this embodiment, since the vehicle left viewpoint image and the vehicle right viewpoint image are obtained after zooming, the camera intrinsic parameters corresponding to the vehicle left viewpoint image and the vehicle right viewpoint image are different from the camera intrinsic parameters corresponding to the scenario left viewpoint image and the scenario right viewpoint image.

As an example, the execution body may determine the camera intrinsic parameter of the vehicle left viewpoint image and the vehicle right viewpoint image through the following equations (1) and (2), respectively.

$$P_3 = \begin{bmatrix} k & 0 & 0 \\ 0 & m & 0 \\ 0 & 0 & 1 \end{bmatrix} * P_1 = \begin{bmatrix} kf_u^{(1)} & 0 & kc_u^{(1)} & -kf_u^{(1)}b_x^{(1)} \\ 0 & mf_v^{(1)} & mc_v^{(1)} & 0 \\ 0 & 0 & 1 & 0 \end{bmatrix} \quad (1)$$

$$P_4 = \begin{bmatrix} k & 0 & 0 \\ 0 & m & 0 \\ 0 & 0 & 1 \end{bmatrix} * P_2 = \begin{bmatrix} kf_u^{(2)} & 0 & kc_u^{(2)} & -kf_u^{(2)}b_x^{(2)} \\ 0 & mf_v^{(2)} & mc_v^{(2)} & 0 \\ 0 & 0 & 1 & 0 \end{bmatrix} \quad (2)$$

Here, *P1* represents the camera intrinsic parameter corresponding to the scenario left viewpoint image, P2 represents the camera intrinsic parameter corresponding to the scenario right viewpoint image, *P3* represents the camera intrinsic parameter of the vehicle left viewpoint image, *P4* represents the camera intrinsic parameter of the vehicle right viewpoint image, k represents the zooming factor of the vehicle left viewpoint image relative to the original left viewpoint image in the horizontal direction, and m represents the zooming factor of the vehicle left viewpoint image relative to the original right viewpoint image in the vertical direction. $f_u$ and $f_v$ represent a focal length of the camera, $C_u$ and $c_v$ represent an offset of the principal point, and $b_x$ represents a baseline relative to the reference camera.

Step S404: based on the camera intrinsic parameter of the vehicle left viewpoint image and the camera intrinsic parameter of the vehicle right viewpoint image, determining the disparity map between the vehicle left viewpoint image and the vehicle right viewpoint image.

As an example, the execution body may input the vehicle left viewpoint image and the vehicle right viewpoint image into a PSMnet model to obtain a corresponding disparity map. For a vehicle to be detected that is far away, the resolution of the zoomed vehicle left viewpoint image and the scaled vehicle right viewpoint image is higher. Therefore, the disparity map obtained in step S404 is more accurate than the disparity map predicted directly from the original left viewpoint image and the original right viewpoint image.

Step S405: inputting the vehicle left viewpoint image and the vehicle right viewpoint image into the part location and mask segmentation network model respectively, and obtaining an encoded feature vector of the vehicle left viewpoint image and an encoded feature vector of the vehicle right viewpoint image.

In this embodiment, the part location and mask segmentation network model is a model adopting an encoder-decoder framework. After inputting the vehicle left viewpoint image and the vehicle right viewpoint image into the part location and mask segmentation network model, the encoded feature vector of the vehicle left viewpoint image and the encoded feature vector of the vehicle right viewpoint image are generated by an encoder of the model, respectively.

Step S406: fusing the encoded feature vector of the vehicle left viewpoint image and the encoded feature vector of the vehicle right viewpoint image to obtain a fused encoded feature vector.

In this embodiment, by fusing (e.g., adding, splicing, or linearly transforming) the encoded feature vector of the vehicle left view image and the encoded feature vector of the vehicle right view image, a feature fusion of the vehicle left view image and the vehicle right view image is realized.

Step S407: decoding the fused encoded feature vector, to obtain the foreground pixels in the reference image and the part coordinate of each foreground pixel, where the reference image is the vehicle left viewpoint image or the vehicle right viewpoint image.

In this embodiment, since the fused encoded feature vector includes the features of the vehicle left viewpoint image and the vehicle right viewpoint image, the adverse effect of the blocked area in the reference image on the segmentation accuracy can be avoided.

Step S408: based on the disparity map between the vehicle left viewpoint image and the vehicle right viewpoint image, the part coordinates of the foreground pixels, and the camera intrinsic parameter of the reference image, converting the coordinates of the foreground pixels in the reference image into the coordinates of the foreground pixels in the camera coordinate system, to obtain the pseudo-point cloud.

In this embodiment, since the vehicle left viewpoint image and the vehicle right viewpoint image are obtained by zooming the original images, the influence of the zooming factor needs to be considered in the process of constructing the pseudo-point cloud. For example, the vehicle left viewpoint image and the vehicle right viewpoint image may be restored to the original sizes according to the zooming factor, and then the 2D coordinates of the foreground pixels in the reference image maybe converted into the 3D coordinates in the camera coordinate system according to the camera intrinsic parameters corresponding to the scenario left viewpoint image and the scenario right viewpoint image, to obtain the pseudo-point cloud.

In some optional implementations of this embodiment, the execution body does not need to restore the vehicle left viewpoint image and the vehicle right viewpoint image to the original sizes, and may directly determine the coordinates of the foreground pixels in the camera coordinate system through the following steps, as exemplified by combining Equation (1) and Equation (2).

Assuming that the reference image is the vehicle left viewpoint image, then for a point whose coordinate in the original left viewpoint image is (x, y), its coordinate in the reference image is (kx, my), its disparity compensation corresponding to the vehicle left viewpoint image and the vehicle right viewpoint image is $\hat{O} = k(x - \bar{x})$, and a baseline distance $\hat{b}_l$, between the camera intrinsic parameter P3 of the vehicle left viewpoint image and the camera intrinsic parameter P4 of the vehicle right viewpoint image may be obtained through the following equation (3).

For any foreground pixel in the reference image, its coordinate is (u, v), and the 3D coordinate (x, y, z) of this foreground pixel in the camera coordinate system may be calculated from the following equation (4):

$$\hat{b}_l = (-f_u^{(1)} b_x^{(1)} + f_u^{(2)} b_x^{(2)}) / (f_u^{(2)}) \qquad (3)$$

$$\begin{cases} x = \left( u + kx - kc_u^{(1)} \right) * \dfrac{z}{\left( kf_u^{(1)} \right)} + b_x^{(1)} \\[2mm] y = \left( v + my - mc_v^{(1)} \right) * \dfrac{z}{\left( mf_v^{(1)} \right)} \\[2mm] z = \dfrac{kf_u^{(1)}\hat{b}_l}{d_{u,v} + \hat{O}} \end{cases} \qquad (4)$$

Here, $d_{u,v}$ represents the disparity value of the foreground pixel, which can be obtained in step S404.

After that, the execution body may input the pseudo-point cloud into a pre-built pose prediction model, and predict the pose information of the vehicle to be detected through the following steps S409 to S412.

In this embodiment, a Dense Fusion model after deleting the CNN (Convolutional Neural Networks) module is used as the pose prediction model, and the color interpolation in the Dense Fusion model is used to perform part location.

Step S409: determining a global feature vector of the vehicle to be detected, based on the pseudo-point cloud coordinates and part coordinates of the foreground pixels.

The execution body may input the pseudo-point cloud obtained in step S408 into the pre-built pose prediction model, and the Point Net in the pose prediction model generates the geometric feature vector and the part feature vector respectively based on the pseudo-point cloud coordinates and the part coordinates of the foreground pixels. Then, a MLP (Multilayer Perceptron, artificial neural network) module fuses the geometric feature vector and the part feature vector, and then generates a global feature vector through the average pooling layer. The global feature vector is used to represent the overall feature of the vehicle to be detected.

Step S410: sampling a preset number of foreground pixels from the pseudo-point cloud.

In this embodiment, since the foreground pixels in the pseudo-point cloud are distributed on the surface of the vehicle to be detected, a preset number of foreground pixels may be randomly sampled from the pseudo-point cloud, which can reduce the amount of calculation without affecting the accuracy of the predicted pose information.

Step S411: predicting a camera extrinsic parameter of the reference image, based on the pseudo-point cloud coordinates and the part coordinates of the preset number of foreground pixels and the global feature vector.

The execution body inputs the pseudo-point cloud coordinates and part coordinates of the sampled foreground pixels and the global feature vector into the pose prediction and optimization sub-network in the pose prediction model at the same time, so that the feature vector of each foreground pixel includes the geometric feature vector corresponding to the pseudo-point cloud coordinate, the part feature vector corresponding to the part coordinate, and the global feature vector. After that, the camera extrinsic parameter (i.e., rotation matrix and translation matrix) corresponding to the reference image are predicted based on the feature vectors of the foreground pixels. The obtained similar extrinsic parameters have higher accuracy.

Step S412: determining the pose information of the vehicle to be detected, based on the camera extrinsic parameter of the reference image. Based on the camera extrinsic parameter of the reference image and the pseudo-point cloud coordinates of the foreground pixels, the coordinates of the foreground pixels in the world coordinate system may be determined, that is, the pose information of the vehicle to be detected is obtained.

Some optional implementations of the above embodiments may further include: taking the fused encoded feature vector as a stereo feature vector; obtaining a 3D fitting score based on the stereo feature vector and the global feature vector, and the 3D fitting score is used to guide the training of the pose prediction model. For example, the executive body may input the stereo feature vector and the global feature vector into a fully connected network, thereby obtaining the 3D fitting score. The pose information output by the pose prediction model can be more accurately evaluated by the 3D fitting score, so the prediction accuracy of the pose prediction model can be improved.

As can be seen from Fig. 4, compared with the first embodiment shown in Fig. 2, the second embodiment has the advantage of: the vehicle left viewpoint image and the vehicle right viewpoint image with the same size are obtained by zooming, and the foreground pixels in the reference image are determined by fusing the features of the vehicle left viewpoint image and the vehicle right viewpoint image, which avoids the decrease in the accuracy of the pose prediction of the vehicle to be detected due to the long distance, and further improves the accuracy of the vehicle pose prediction.

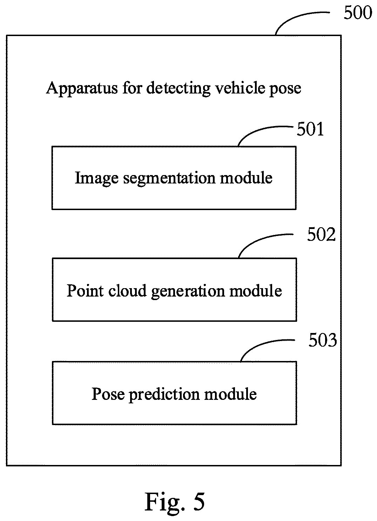

Fig. 5 illustrates a block diagram of an electronic device according to the method for detecting vehicle pose disclosed in the present disclosure. The electronic device includes: an image segmentation module 501, configured to input a vehicle left viewpoint image and a vehicle right viewpoint image into a part location and mask segmentation network model constructed based on prior data of a vehicle part, and determine foreground pixels in a reference image and a part coordinate of each foreground pixel, wherein the part coordinate is used to represent a position of the foreground pixel in a coordinate system of a vehicle to be detected, and the reference image is the vehicle left viewpoint image or the vehicle right viewpoint image; a point cloud generation module 502, configured to convert coordinates of the foreground pixels in the reference image into coordinates of the foreground pixels in a camera coordinate system, based on a disparity map between the vehicle left viewpoint image and the vehicle right viewpoint image, part coordinates of the foreground pixels, and a camera intrinsic parameter of the reference image, so as to obtain a pseudo-point cloud; and a pose prediction module 503, configured to input the pseudo-point cloud into a pre-trained pose prediction model to obtain a pose information of the vehicle to be detected.

In this embodiment, the apparatus further includes an image scaling module configured to determine the vehicle left viewpoint image and the vehicle right viewpoint image through the following steps: extracting, from a scenario left viewpoint image and a scenario right viewpoint image of a same scenario collected by a binocular camera, an original left viewpoint image and an original right viewpoint image of the vehicle to be detected, respectively; zooming the original left viewpoint image and the original right viewpoint image to a preset size, respectively, to obtain the vehicle left viewpoint image and the vehicle right viewpoint image. The apparatus also includes a disparity map generation module, configured to determine a disparity map between the vehicle left viewpoint image and the vehicle right viewpoint image through the following steps: respectively determining a camera intrinsic parameter of the vehicle left viewpoint image and a camera intrinsic parameter of the vehicle right viewpoint image, based on an initial camera intrinsic parameter of the scenario left viewpoint image, an initial camera intrinsic parameter of the scenario right viewpoint image, and a zooming factor; and, determining the disparity map between the vehicle left viewpoint image and the vehicle right viewpoint image based on the camera intrinsic parameter of the vehicle left viewpoint image and the camera intrinsic parameter of the vehicle right viewpoint image.

In this embodiment, the part location and mask segmentation network model is a model adopting an encoder-decoder framework. The image segmentation module 501 is further configured to: input the vehicle left viewpoint image and the vehicle right viewpoint image into the part location and mask segmentation network model respectively, and obtaining an encoded feature vector of the vehicle left viewpoint image and an encoded feature vector of the vehicle right viewpoint image; fuse the encoded feature vector of the vehicle left viewpoint image and the encoded feature vector of the vehicle right viewpoint image, to obtain a fused encoded feature vector; and decode the fused encoded feature vector, to obtain the foreground pixels in the reference image and the part coordinate of each foreground pixel.

In this embodiment, the pose prediction module 503 is further configured to: determine a global feature vector of the vehicle to be detected, based on pseudo-point cloud coordinates and the part coordinates of the foreground pixels; sample a preset number of foreground pixels from the pseudo-point cloud; predict a camera extrinsic parameter of the reference image, based on pseudo-point cloud coordinates of the preset number of foreground pixels, and part coordinates of the preset number of foreground pixels, and the global feature vector; and determine the pose information of the vehicle to be detected, based on the camera extrinsic parameter.

In this embodiment, the device further includes a model training module, which is configured to: take the fused encoded feature vector as a stereo feature vector; obtain a 3D fitting score based on the stereo feature vector and the global feature vector, and the 3D fitting score is used to guide the training of the pose prediction model.

In this embodiment, the point cloud generation module 502 is further configured to: determine a depth value of a foreground pixel, based on the camera intrinsic parameter of the reference image and the disparity map between the vehicle left viewpoint image and the vehicle right viewpoint image; based on the coordinate of the foreground pixel in the reference image and the depth value, obtain an initial coordinate of the foreground pixel in the camera coordinate system; and update the initial coordinate based on the part coordinate of the foreground pixel, to obtain a pseudo-point cloud coordinate of the foreground pixel.

According to embodiments of the present disclosure, an electronic device and a readable storage medium are further provided.

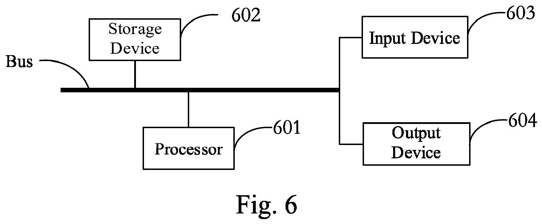

Fig. 6 is a schematic block diagram of an exemplary electronic device that may be used to implement the embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital assistant, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 6, the electronic device includes: one or more processors 601, a storage device 602, and interfaces for connecting various components, including a high-speed interface and a low-speed interface. The various components are connected to each other through different buses and may be mounted on a common motherboard or otherwise as desired. The processor may process instructions executed within the electronic device, including instructions stored in the storage device to display graphical information of the GUI on an external input/output device, such as a display device coupled to the interface. In other embodiments, multiple processors and/or multiple buses may be used with multiple memories, if desired. Likewise, multiple electronic devices may be connected, each providing some of the necessary operations (e.g., as a server array, a group of blade servers, or a multiprocessor system). One processor 601 is taken as an example in Fig. 6.

The storage device 602 is the non-transitory computer-readable storage medium provided by the present disclosure. Here, the storage device stores instructions executable by at least one processor, so that the at least one processor executes the method provided by embodiments of the present disclosure. The non-transitory computer-readable storage medium of the present disclosure stores computer instructions for causing a computer to perform the method provided by embodiments of the present disclosure.

As a non-transitory computer-readable storage medium, the storage device 602 may be used to store non-transitory software programs, non-transitory computer-executable programs and modules, such as program instructions/modules (for example, the image segmentation module 501, the point cloud generation module 502 and the pose prediction module 503 shown in Fig. 5) corresponding to the method provided by embodiments of the present disclosure. The processor 601 executes various functional applications of the server and data processing by running the non-transitory software programs, instructions and modules stored in the storage device 602, that is, the method according to the above method embodiments.

The storage device 602 may include a storage program area and a storage data area. Here the storage program area may store an operating system, an application program required for at least one function; the storage data area may store data created according to the use of the electronic device of the computer-storable storage medium, and the like. Additionally, the storage device 602 may include high-speed random access memory, and may also include non-transitory memory, such as at least one of magnetic disk storage device, flash memory device, and other non-transitory solid state storage device. In some embodiments, the storage device 602 may optionally include a storage device located remotely from the processor 601, such remote storage device may be connected to the electronic device of the computer-storable storage medium via a network. Examples of such network include, but are not limited to, the Internet, an intranet, a local area network, a mobile communication network, and combinations thereof.

The electronic device according to embodiments of the present disclosure may further include an input device 603 and an output device 604. The processor 601, the storage device 602, the input device 603 and the output device 604 may be connected by a bus or in other ways, and the connection by a bus is taken as an example in Fig. 6.

The input device 603 may receive input numerical or character information, and generate key signal input related to user settings and functional control of electronic devices of the computer-storable medium, such as touch screen, keypad, mouse, trackpad, touchpad, pointing sticks, one or more mouse buttons, trackball, joysticks and other input devices. The output device 604 may include display device, auxiliary lighting device (e.g., LEDs), haptic feedback device (e.g., vibration motors), and the like. The display device may include, but is not limited to, a liquid crystal display (LCD), a light emitting diode (LED) display, and a plasma display. In some implementations, the display device may be a touch screen.

Various implementations of the systems and technologies described herein may be implemented in digital electronic circuitry, integrated circuit systems, application specific ASICs (application specific integrated circuits), computer hardware, firmware, software, and/or combinations thereof. These various embodiments may include: being implemented in one or more computer programs executable and/or interpretable on a programmable system including at least one programmable processor, the programmable processor may be a special purpose or general-purpose programmable processor, may receive data and instructions from a storage system, at least one input device, and at least one output device, and transmit data and instructions to the storage system, the at least one input device, and the at least one output device.

These computer programs (also referred to as programs, software, software applications, or codes) include machine instructions for programmable processors, and may be implemented using high-level procedural and/or object-oriented programming languages, and/or assembly/machine languages. As used herein, the terms "machine-readable medium" and "computer-readable medium" refer to any computer program product, device, and/or apparatus (e.g., magnetic disks, optical disks, memories, programmable logic devices (PLDs)) for providing machine instructions and/or data to a programmable processor, including machine-readable media that receive machine instructions as machine-readable signals. The term "machine-readable signal" refers to any signal used to provide machine instructions and/or data to a programmable processor.

To provide interaction with a user, the systems and technologies described herein may be implemented on a computer having a display device (e.g., a CRT (cathode ray tube) or LCD (liquid crystal display) monitor) for displaying information to the user; and a keyboard and pointing device (e.g., a mouse or trackball) through which a user can provide input to the computer. Other kinds of devices may also be used to provide interaction with the user. For example, the feedback provided to the user may be any form of sensory feedback (e.g., visual feedback, auditory feedback, or tactile feedback); and may be in any form (including acoustic input, voice input, or tactile input) to receive input from the user.

The systems and technologies described herein may be implemented in a computing system (e.g., as a data server) that includes back-end components, or a computing system (e.g., an application server) that includes middleware components, or a computing system (for example, a user computer with a graphical user interface or a web browser, through which the user may interact with the embodiments of the systems and technologies described herein) that includes front-end components, or a computing system that includes any combination of such back-end components, middleware components, or front-end components. The components of the system may be interconnected by any form or medium of digital data communication (e.g., a communication network). Examples of the communication network include: local area network (LAN), wide area network (WAN), and Internet.

The computer system may include a client and a server. The client and the server are generally far from each other and usually interact through a communication network. The client and server relationship is generated by computer programs operating on the corresponding computer and having client-server relationship with each other.

According to the technical solutions of embodiments of the present disclosure, the part location and mask segmentation are performed on the collected left viewpoint image and right viewpoint image of the vehicle based on the prior data of the vehicle parts, thus more accurate segmentation results can be obtained, and the accuracy of vehicle pose prediction can be improved.

It should be understood that various forms of processes shown above may be used to reorder, add, or delete steps. For example, the steps described in the present disclosure may be performed in parallel, sequentially, or in different orders, as long as the desired results of the technical solution disclosed in embodiments of the present disclosure can be achieved, no limitation is made herein.

The above specific embodiments do not constitute a limitation on the protection scope of the present disclosure. Those skilled in the art should understand that various modifications, combinations, sub-combinations and substitutions can be made according to design requirements and other factors. Any modification, equivalent replacement and improvement made within the spirit and principle of the present disclosure shall be included in the protection scope of the present disclosure.

**Claims**

1. A method for detecting vehicle pose, comprising:

   inputting a vehicle left viewpoint image and a vehicle right viewpoint image into a part location and mask segmentation network model constructed based on prior data of a vehicle part, and determining foreground pixels in a reference image and a part coordinate of each foreground pixel, wherein the part coordinate is used to represent a position of the foreground pixel in a coordinate system of a vehicle to be detected, and the reference image is the vehicle left viewpoint image or the vehicle right viewpoint image;
   based on a disparity map between the vehicle left viewpoint image and the vehicle right viewpoint image, part coordinates of the foreground pixels, and a camera intrinsic parameter of the reference image, converting coordinates of the foreground pixels in the reference image into coordinates of the foreground pixels in a camera coordinate system, so as to obtain a pseudo-point cloud; and
   inputting the pseudo-point cloud into a pre-trained pose prediction model to obtain a pose information of the vehicle to be detected.

2. The method according to claim 1, wherein, the vehicle left viewpoint image and the vehicle right viewpoint image are determined by following steps:

   extracting, from a scenario left viewpoint image and a scenario right viewpoint image of a same scenario collected by a binocular camera, an original left viewpoint image and an original right viewpoint image of the vehicle to be detected, respectively; and
   zooming the original left viewpoint image and the original right viewpoint image to a preset size, respectively, to obtain the vehicle left viewpoint image and the vehicle right viewpoint image,
   the disparity map between the vehicle left viewpoint image and the vehicle right viewpoint image are determined by following steps:

   respectively determining a camera intrinsic parameter of the vehicle left viewpoint image and a camera intrinsic parameter of the vehicle right viewpoint image, based on an initial camera intrinsic parameter of the scenario left viewpoint image, an initial camera intrinsic parameter of the scenario right viewpoint image, and a zooming factor; and
   determining the disparity map between the vehicle left viewpoint image and the vehicle right viewpoint image based on the camera intrinsic parameter of the vehicle left viewpoint image and the camera intrinsic parameter of the vehicle right viewpoint image.

3. The method according to claim 1 or 2, wherein, the part location and mask segmentation network model is a model adopting an encoder-decoder framework; and
   the inputting the vehicle left viewpoint image and the vehicle right viewpoint image into the part location and mask segmentation network model constructed based on the prior data of the vehicle part, and determining the foreground pixels in the reference image and the part coordinate of each foreground pixel, comprising:

   inputting the vehicle left viewpoint image and the vehicle right viewpoint image into the part location and mask segmentation network model respectively, and obtaining an encoded feature vector of the vehicle left viewpoint image and an encoded feature vector of the vehicle right viewpoint image;
   fusing the encoded feature vector of the vehicle left viewpoint image and the encoded feature vector of the vehicle right viewpoint image, to obtain a fused encoded feature vector; and
   decoding the fused encoded feature vector, to obtain the foreground pixels in the reference image and the part coordinate of each foreground pixel.

4. The method according to claim 3, wherein, the inputting the pseudo-point cloud into the pre-trained pose prediction model to obtain the pose information of the vehicle to be detected, comprising:

   determining a global feature vector of the vehicle to be detected, based on pseudo-point cloud coordinates and the part coordinates of the foreground pixels;
   sampling a preset number of foreground pixels from the pseudo-point cloud;
   predicting a camera extrinsic parameter of the reference image, based on pseudo-point cloud coordinates of the preset number of foreground pixels, part coordinates of the preset number of foreground pixels, and the global feature vector; and

determining the pose information of the vehicle to be detected, based on the camera extrinsic parameter.

5. The method according to claim 3, further comprising:

taking the fused encoded feature vector as a stereo feature vector; and
obtaining a 3D fitting score based on the stereo feature vector and the global feature vector, wherein the 3D fitting score is used to guide the training of the pose prediction model.

6. The method according to any one of claims 1-5, wherein, the based on the disparity map between the vehicle left viewpoint image and the vehicle right viewpoint image, the part coordinates of the foreground pixels, and the camera intrinsic parameter of the reference image, converting the coordinates of the foreground pixels in the reference image into coordinates of the foreground pixels in a camera coordinate system, so as to obtain the pseudo-point cloud, comprising:

determining a depth value of a foreground pixel, based on the camera intrinsic parameter of the reference image and the disparity map between the vehicle left viewpoint image and the vehicle right viewpoint image;
based on the coordinate of the foreground pixel in the reference image and the depth value, obtaining an initial coordinate of the foreground pixel in the camera coordinate system; and
updating the initial coordinate based on the part coordinate of the foreground pixel, to obtain a pseudo-point cloud coordinate of the foreground pixel.

7. An apparatus for detecting vehicle pose, comprising:

an image segmentation module, configured to input a vehicle left viewpoint image and a vehicle right viewpoint image into a part location and mask segmentation network model constructed based on prior data of a vehicle part, and determine foreground pixels in a reference image and a part coordinate of each foreground pixel, wherein the part coordinate is used to represent a position of the foreground pixel in a coordinate system of a vehicle to be detected, and the reference image is the vehicle left viewpoint image or the vehicle right viewpoint image;
a point cloud generation module, configured to convert coordinates of the foreground pixels in the reference image into coordinates of the foreground pixels in a camera coordinate system, based on a disparity map between the vehicle left viewpoint image and the vehicle right viewpoint image, part coordinates of the foreground pixels, and a camera intrinsic parameter of the reference image, so as to obtain a pseudo-point cloud; and
a pose prediction module, configured to input the pseudo-point cloud into a pre-trained pose prediction model to obtain a pose information of the vehicle to be detected.

8. The apparatus according to claim 7, wherein, the apparatus further comprising an image scaling module, the image scaling module is configured to determine the vehicle left viewpoint image and the vehicle right viewpoint image through following steps:

extracting, from a scenario left viewpoint image and a scenario right viewpoint image of a same scenario collected by a binocular camera, an original left viewpoint image and an original right viewpoint image of the vehicle to be detected, respectively; and
zooming the original left viewpoint image and the original right viewpoint image to a preset size, respectively, to obtain the vehicle left viewpoint image and the vehicle right viewpoint image,

the apparatus further comprising a disparity map generation module, the disparity map generation module is configured to determine the disparity map between the vehicle left viewpoint image and the vehicle right viewpoint image through following steps:

respectively determining a camera intrinsic parameter of the vehicle left viewpoint image and a camera intrinsic parameter of the vehicle right viewpoint image, based on an initial camera intrinsic parameter of the scenario left viewpoint image, an initial camera intrinsic parameter of the scenario right viewpoint image, and a zooming factor; and,
determining the disparity map between the vehicle left viewpoint image and the vehicle right viewpoint image based on the camera intrinsic parameter of the vehicle left viewpoint image and the camera intrinsic parameter of the vehicle right viewpoint image.

9. The apparatus according to claim 7 or 8, wherein, the part location and mask segmentation network model is a model adopting an encoder-decoder framework; and the image segmentation module is further configured to:

input the vehicle left viewpoint image and the vehicle right viewpoint image into the part location and mask segmentation network model respectively, and obtaining an encoded feature vector of the vehicle left viewpoint image and an encoded feature vector of the vehicle right viewpoint image;

fuse the encoded feature vector of the vehicle left viewpoint image and the encoded feature vector of the vehicle right viewpoint image, to obtain a fused encoded feature vector; and

decode the fused encoded feature vector, to obtain the foreground pixels in the reference image and the part coordinate of each foreground pixel.

10. The apparatus according to claim 9, wherein, the pose prediction module is further configured to:

determine a global feature vector of the vehicle to be detected, based on pseudo-point cloud coordinates and the part coordinates of the foreground pixels;

sample a preset number of foreground pixels from the pseudo-point cloud;

predict a camera extrinsic parameter of the reference image, based on pseudo-point cloud coordinates of the preset number of foreground pixels, and part coordinates of the preset number of foreground pixels, and the global feature vector; and

determine the pose information of the vehicle to be detected, based on the camera extrinsic parameter.

11. The apparatus according to claim 10, wherein, the apparatus further comprising a model training module, the model training module is configured to:

take the fused encoded feature vector as a stereo feature vector; and

obtain a 3D fitting score based on the stereo feature vector and the global feature vector, wherein the 3D fitting score is used to guide the training of the pose prediction model.

12. The apparatus according to any one of claims 7-11, wherein, the point cloud generation module is further configured to:

determine a depth value of a foreground pixel, based on the camera intrinsic parameter of the reference image and the disparity map between the vehicle left viewpoint image and the vehicle right viewpoint image;

based on the coordinate of the foreground pixel in the reference image and the depth value, obtain an initial coordinate of the foreground pixel in the camera coordinate system; and

update the initial coordinate based on the part coordinate of the foreground pixel, to obtain a pseudo-point cloud coordinate of the foreground pixel.

13. An electronic device, comprising:

at least one processor; and

a storage device, communicated with the at least one processor,

wherein the storage device stores an instruction executable by the at least one processor, and the instruction is executed by the at least one processor, to enable the at least one processor to perform the method according to any one of claims 1-6.

14. A non-transitory computer readable storage medium, storing a computer instruction, wherein the computer instruction is used to cause a computer to perform the method according to any one of claims 1-6.

Fig. 1

Input a vehicle left viewpoint image and a vehicle right viewpoint image into a part location and mask segmentation network model constructed based on prior data of vehicle part, and determine the foreground pixels in a reference image and a part coordinate of each foreground pixel — S201

Convert the coordinates of the foreground pixels in the reference image into coordinates of the foreground pixels in a camera coordinate system, based on a disparity map between the vehicle left viewpoint image and the vehicle right viewpoint image, part coordinates of the foreground pixels, and a camera intrinsic parameter of the reference image, so as to obtain a pseudo-point cloud — S202

Input the pseudo-point cloud into the pre-trained pose prediction model to obtain a pose information of the vehicle to be detected — S203

Fig. 2

Fig. 3

Extract, from a scenario left viewpoint image and a scenario right viewpoint image of a same scenario collected by a binocular camera, an original left viewpoint image and an original right viewpoint image of the vehicle to be detected, respectively ⟋— S401

↓

Zoom the original left viewpoint image and the original right viewpoint image to a preset size, respectively, to obtain the vehicle left viewpoint image and the vehicle right viewpoint image ⟋— S402

↓

Determine respectively a camera intrinsic parameter of the vehicle left viewpoint image and a camera intrinsic parameter of the vehicle right viewpoint image, based on an initial camera intrinsic parameter of the scenario left viewpoint image, an initial camera intrinsic parameter of the scenario right viewpoint image, and a zooming factor ⟋— S403

↓

Determine the disparity map between the vehicle left viewpoint image and the vehicle right viewpoint image, based on the camera intrinsic parameter of the vehicle left viewpoint image and the camera intrinsic parameter of the vehicle right viewpoint image ⟋— S404

↓

Input the vehicle left viewpoint image and the vehicle right viewpoint image into the part location and mask segmentation network model respectively, and obtain an encoded feature vector of the vehicle left viewpoint image and an encoded feature vector of the vehicle right viewpoint image ⟋— S405

↓

Fuse the encoded feature vector of the vehicle left viewpoint image and the encoded feature vector of the vehicle right viewpoint image to obtain a fused encoded feature vector ⟋— S406

↓

Decode the fused encoded feature vector, to obtain the foreground pixels in the reference image and the part coordinate of each foreground pixel ⟋— S407

↓

Convert the coordinates of the foreground pixels in the reference image into the coordinates of the foreground pixels in the camera coordinate system, based on the disparity map between the vehicle left viewpoint image and the vehicle right viewpoint image, the part coordinates of the foreground pixels, and the camera intrinsic parameter of the reference image, so as to obtain the pseudo-point cloud ⟋— S408

↓

Determine a global feature vector of the vehicle to be detected, based on the pseudo-point cloud coordinates and part coordinates of the foreground pixels ⟋— S409

↓

Sample a preset number of foreground pixels from the pseudo-point cloud ⟋— S410

↓

Predict a camera extrinsic parameter of the reference image, based on the pseudo-point cloud coordinates and the part coordinates of the preset number of foreground pixels and the global feature vector ⟋— S411

↓

Determine the pose information of the vehicle to be detected, based on the camera extrinsic parameter of the reference image ⟋— S412

Fig. 4

500

Apparatus for detecting vehicle pose

501

Image segmentation module

502

Point cloud generation module

503

Pose prediction module

Fig. 5

Fig. 6

| INTERNATIONAL SEARCH REPORT | International application No. |
| --- | --- |
| | **PCT/CN2020/130107** |

**A.    CLASSIFICATION OF SUBJECT MATTER**

G06T 7/194(2017.01)i

According to International Patent Classification (IPC) or to both national classification and IPC

**B.    FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNABS, CNTXT, CNKI, DWPI, SIPOABS, USTXT, WOTXT, EPTXT, PATENTICS, 读秀: 左, 车辆, 坐标, 图像, 右, 坐标, 模型, vehicle, coordinate, image, left, right, model

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 111539973 A (BEIJING BAIDU NETCOM SCIENCE AND TECHNOLOGY CO., LTD.) 14 August 2020 (2020-08-14) claims 1-14 | 1-14 |
| X | CN 108749819 A (JILIN UNIVERSITY) 06 November 2018 (2018-11-06) description, paragraphs [0044]-[0093] | 1-14 |
| A | CN 107505644 A (WUHAN UNIVERSITY OF TECHNOLOGY) 22 December 2017 (2017-12-22) entire document | 1-14 |
| A | CN 108534782 A (UNIVERSITY OF ELECTRONIC SCIENCE AND TECHNOLOGY OF CHINA) 14 September 2018 (2018-09-14) entire document | 1-14 |
| A | US 2020125869 A1 (AUTOMOTIVE RESEARCH & TESTING CENTER) 23 April 2020 (2020-04-23) entire document | 1-14 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **03 February 2021** | **22 February 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/130107**

| Patent document cited in search report | | | Publication date (day/month/year) | Patent family member(s) | | | Publication date (day/month/year) |
|---|---|---|---|---|---|---|---|
| CN | 111539973 | A | 14 August 2020 | None | | | |
| CN | 108749819 | A | 06 November 2018 | CN | 108749819 | B | 03 September 2019 |
| CN | 107505644 | A | 22 December 2017 | CN | 107505644 | B | 05 May 2020 |
| CN | 108534782 | A | 14 September 2018 | None | | | |
| US | 2020125869 | A1 | 23 April 2020 | DE | 102018129993 | A1 | 23 April 2020 |
| | | | | TW | 202017433 | A | 01 May 2020 |
| | | | | TW | I700017 | B | 21 July 2020 |
| | | | | JP | 6723328 | B2 | 15 July 2020 |
| | | | | JP | 2020064583 | A | 23 April 2020 |

Form PCT/ISA/210 (patent family annex) (January 2015)

**REFERENCES CITED IN THE DESCRIPTION**

**Patent documents cited in the description**

- CN 202010347485